**Europäisches Patentamt**

**European Patent Office**

**Office européen des brevets**

(11) Publication number: **0 119 222**
**B1**

(12) **EUROPEAN PATENT SPECIFICATION**

(45) Date of publication of patent specification: **06.04.88**

(21) Application number: **83902813.1**

(22) Date of filing: **19.08.83**

(86) International application number:
**PCT/FI83/00056**

(87) International publication number:
**WO 84/00665 01.03.84 Gazette 84/06**

(51) Int. Cl.⁴: **A 01 J 5/04**

(54) **PROCEDURE AND MEANS FOR IMPROVING THE MILKING PROCESS.**

(30) Priority: **20.08.82 FI 822909**

(43) Date of publication of application:
**26.09.84 Bulletin 84/39**

(45) Publication of the grant of the patent:
**06.04.88 Bulletin 88/14**

(84) Designated Contracting States:
**BE DE FR NL SE**

(56) References cited:
**SE-A- 427 981**
**US-A-2 824 448**

(73) Proprietor: **OJALA, Lauri**
**Verhiöpolku 5 as. 2**
**SF-70280 Kuopio 28 (FI)**

(72) Inventor: **OJALA, Lauri**
**Verhiöpolku 5 as. 2**
**SF-70280 Kuopio 28 (FI)**

(74) Representative: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

## Description

The present invention concerns a procedure and an apparatus for improving the milking process.

Currently, cows are mainly milked mechanically by means of a milking machine, the operation of which is based on vacuum. In general use is a so-called can machine which milks the milk into a milk can with 20 l capacity. The pipe milking machines, in which the milk is transferred by the aid of vacuum of the machinery directly into the farm tank are, however, becoming increasingly common.

To the udders is attached a milking device, with each teat in its own teat cup. In the teat rubber is generated a vacuum of about 0.5 atmospheres, whereby the sphincter of the teat chamber opens and the milk runs out.

It is not possible, however, to continue the sucking step without interruption until the udder is drained; it is instead discontinued and the teat cup is allowed to press the teat for a while, this being accomplished by applying atmospheric pressure in the pulsation chamber defined between the teat cup and the teat rubber. These sucking and massage phases are repeated 50—60 times per minute.

The operation of the milking machine affects the functional capability and health of the udder.

The poor udder health of Finnish dairy cattle causes annually major financial losses to the dairy industry in Finland, the annual losses incurred directly by the milk producers being estimated at 300—400 million Finnish marks. In a healthy herd, one sick individual implies a great risk to the economy of the farm. For this reason, improvements of the milking apparatus are required by which one is enabled to reduce both the risk of falling ill and the risk of spreading disease.

In the pipe milking machines in current use, with an overhead milk pipe, the vacuum varies in the teat rubber during milking, which is a partial cause for the "teat ends being wetted" with milk; this occurrence may be a contributory factor spreading bovine mastitis. Owing to the reasons mentioned above, the milking machine may in part be responsible for mastitis in cows.

Furthermore, when the milk is transported from the place of milking in machines known in the art, it is necessary to conduct air into the milk through an aperture in the centerpiece or claw. According to the standards valid in the Nordic Countries, at least 4 l/min of air shall be introduced through the centerpiece. The unfavourable effects of air on the microbiological as well as physical quality of the milk are commonly known. Separation of air and milk is therefore important.

Currently, the milk is carried under vacuum all the way to the collector tank. Thus, there is time for the milk to cool and for crystallization of the milk fat to come under way. When subsequently the milk is taken from the collector tank by the aid of a pump, this imposes great strain on the fat globule, which is in a "sensitive" phase of crystallization. When either completely crystallized or uncrystallized, milk tolerates best all kinds of treatment, such as pumping.

Attempts have been made to improve the health of cattle e.g. by reducing contamination in the cow-house air; this is one of the aims of the milking machine described in DE—A—2622371.

In case of this pipe milking machine the milk is pumped by means of teat rubber under admission of air into claws and from there to collecting tanks, wherein the air and the milk are collected and separated from each other. After finishing the continuous separation process the milk is pumped by means of the vacuum pump to a further collector and from there via a tube to an overhead milk pipe.

The pumping of milk in a semicooled state, which it has reached after that kind of separation process, is harmful to its quality, especially to that of the fat globules of milk. Furthermore, the milk is transported with the aid of air, whereby milk and air are mingled up and the time required for the separation of the milk and the air in the collector tanks is increased; the milk must ascend prior to the pumping, too, and that results in an undesired segregation within the milk.

It is an object of the present invention to provide a procedure and an apparatus which can conduct the milk from the udders to cans, respectively to the farm tank without changing the characteristic properties of the milk.

This object is achieved by the features of claim 1 respectively claim 5. The invention realizes the possibility to bring the collector tank "close to the cow", i.e., the claw 2 serves as an air separation space from which a pump such as, for example, a piston pump or a diaphragm pump, carries the milk further, either to a conventional collector tank or to a farm tank. This means that no air flow at all is used in the transporting of the milk.

Owing to the design according to the invention, very little dust and very few microbes present in the cow-house air will get into the milk because the air is separated in the claw and the air does not go a long way with the milk. The design of the invention is suitable for use as an ancillary to the already existing milking machines on farms.

The design according to the invention also makes it possible to arrange the precooling of milk, because the milk flows at a uniform rate. Moreover, by means of the design according to the invention it is also possible to measure the milk quantity that has been milked and to take a sample, if needed.

Further advantages and features of the invention derive from the subclaims.

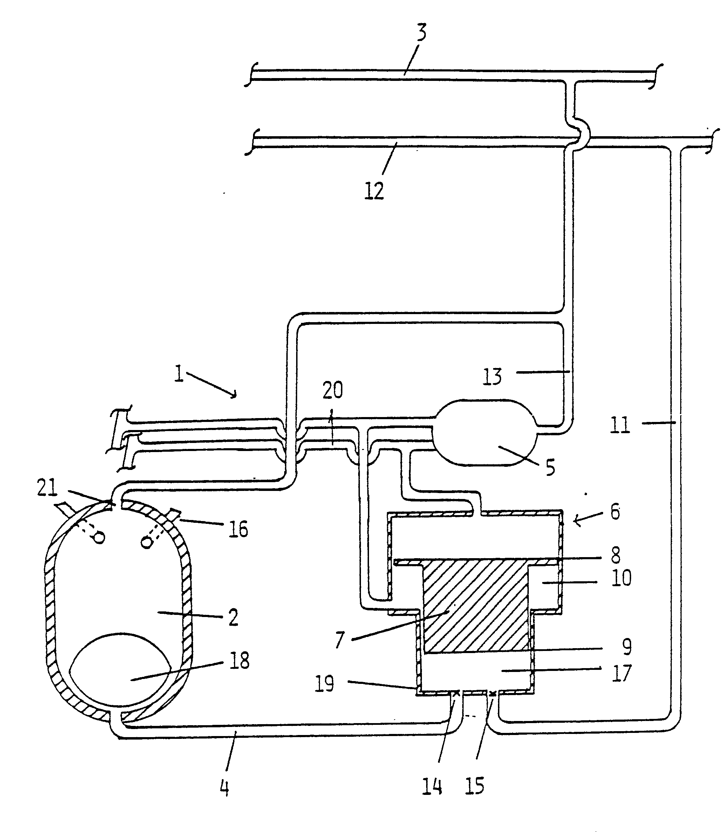

The invention and the advantages gainable thereby are described more in detail in the following, reference being made to the example of the drawing attached, which presents schematically a pipe milking machine with an overhead milk pipe, provided with an ancillary means.

The vacuum fluctuations acting on the teat end in the pipe milking machine known in the art have been substantially eliminated in the apparatus 1 of the invention by carrying air and milk by different routes from a claw 2 provided with a float 18; the air is drawn overhead via a vacuum pipe 3 and the milk is drawn the lower way via a suction pipe 4.

The float 18 has been so constructed that it also closes a mouth of an air pipe which connects the top 21 of the claw 2 and the vacuum pipe 3, if for one reason or another the milk level rises too high. The weight of the float 18 causes it to come off the mouth immediately when the milk level falls.

The separate removal of the milk via the lower way is made possible by a piston pump 6 governed by a pulsator 5 and utilizing the vacuum prevailing in the vacuum pipe 3, which is part of the milking apparatus 1. The pump 6 is connected to a dual suction tube 20 of the apparatus 1, in parallel with the pulsation chambers (not depicted). The operation of the pump 6 at the top 21 of the claw 2 is rendered possible by a difference area 10 between an air surface 8 and a milk surface 9 of a milk-sucking piston 7. The pushing force which the pump 6 is required to produce is in turn produced by carrying the vacuum, by the aid of the pulsator 5, to the difference area or collar 10 remaining below the air surface 8.

A vacuum pump generates a vacuum which can be used to supply work. The milk is in similar way under a vacuum of equal magnitude in the claw 2. The pump 6 (a differential pump) enables the milk to be drawn into normal pressure, using for pushing force a vacuum of equal magnitude, whereby the milk surface 8, respectively the air surface 9 of the piston 7, being of different size, make the operation of the piston 7 possible. The pushing force of the pump 6 is needed to push the milk via a milk tube 11 into an overhead milk pipe 12, where normal pressure has to prevail, in contrast to a conventional milking machine.

The milk milked by utilizing the apparatus 1 is conducted in normal manner from the teats through teat rubbers 16 under vacuum to the claw 2. During the suction phase, the pump 6 draws during the initial part of the dual beat of the pulsator 5 milk which is present in the claw 2; hereby, the milk passes along the suction pipe 4 through a valve 14 into a milk chamber 17 of the pump 6. The suction of the pump 6 persists until the float 18 reaches the bottom of the claw 2, whereby the milk flow ceases.

During the latter part of the dual beat of the pulsator 5, or the compression phase, the piston 7 pushes the milk through a valve 15 via the milk tube 11 into the milk pipe 12, which slopes towards the farm tank (not depicted), and the milk runs into the farm tank by gravity action.

In the prototype that has been constructed, the milk pump 6 has been installed in immediate adjacency of the claw 2. The size and weight of the pump 6 may occasionally restrict a design of this type, and it is then possible to apply an embodiment in which the pump 6 has been disposed at the lower end of a pipe 13, hanging down from the vacuum pipe 3, together with the pulsator 5 belonging to the milking apparatus 1 (as has been imagined to be done in the design of the figure).

The claw 2 may be so dimensioned that it is usable even for milking cows more sensitive to milking. The prototype has been dimensioned for a milk output of about 5 l/min when the beat rate of the pulsator 5 is 50 dual beats per minute.

The capacity of the pump 6, again, is dependent on the beat rate of the pulsator 5. It is true, though, that the beat rate of the pulsator 5 also effects the milking capacity (in 1/min).

Furthermore, the apparatus 1 allows continuous easy measurement and sampling of the milk quantity that has been milked. When milking with the means known in the art, a separate measuring apparatus is required, which is hung between the milking unit and the milk pipe. The apparatus takes a proportional sample from the milk pipe in order to measure the milk quantity (quantitative sample).

In the apparatus 1 the pump 6 pumps milk only, and since the volume of the cylinder is known, a pick-up may be installed on the side of the pump 6 to measure the length of the suction travel (or of the compression travel) of the piston 7, whereby the exact milk quantity can be determined.

By conducting the milk from the milk chamber 17 of the pump 6 during the compression step through a hole of suitable size respectively a sampling nipple 19 into a sampling vessel, it is also possible to obtain a proportional sample from the quantity of the milk that has passed through the pump 6.

In a milking machine provided with an accessory as taught by the invention, the admixing of air to the milk is considerably reduced from what it is now, because air cannot enter the claw 2 by any other route but by the top of the teat rubbers 16 through the space between the teat and the collar of the teat rubber 16.

In addition, equipment provided with the apparatus 1 treats the milk more gently than any apparatus of prior art, because the pump 6 causes the pump strain acting on the milk immediately after the milking when the milk has not had time to cool essentially and likewise crystallization of the fat has not yet come under way.

When using the apparatus 1, a collector tank is no longer indispensable, even though it may be necessary for cleaning or other reasons.

Introduction of the ancillary pump 6 saves the costs arising from a milk pump, since it operates on the same vacuum as the rest of the milking machine. In all likelihood the vacuum level in the vacuum system is lowered and otherwise the power requirement is reduced, because lifting of the milk to the milk pipe 12 and its further transporting is not accomplished with the aid of air flow.

The ancillary pump 6 may be used in almost any milking machine with overhead milk pipe in current use in Finland.

The invention may be varied and modified within the scope of the claims, in accordance with the conditions of service.

**Claims**

1. A milking procedure for pipe milking machines provided with on overhead milk pipe (12) and a claw (2), characterized in that in said claw (2) a continuous vacuum is maintained during the milking by conducting the air from the top (21) of said claw (2) to a vacuum pipe (3) and that the milk is carried directly from the lower part of said claw (2) by a lower route through a suction pipe (4) with the aid of a pump (6) into said milk pipe (12).

2. A procedure according to claim 1, characterized in that in said milk pipe (12) atmospheric pressure is maintained, wherein the milk flows via said milk pipe (12), which slopes towards a farm tank, to provide substantially uniform flow.

3. A procedure according to claim 1, characterized in that the milk is drawn from said claw (2) by means of a piston pump (6) governed by a pulsator (5) of said milking machine and utilizing the vacuum in said vacuum pipe (3).

4. A procedure according to claim 3, characterized in that a piston (7) of said pump (6) during the first phase of each dual beat of said pulsator (5) draws milk through said suction pipe (4) to a milk chamber (17) of said pump and during the second phase pushes the milk via a milk tube (11) into said milk pipe (12).

5. An apparatus for use in a procedure according to any of claims 1, 2, 3 or 4, characterized in that a pipe milking machine is provided with a piston pump (6), by which milk is drawn from a lower part of a claw (2) via a suction pipe (4) into a milk chamber (17) of said pump (6), and pumped from said milk chamber (17) via a milk tube (11) into a milk pipe (12), where atmospheric pressure prevails, a vacuum pipe (3) being connected to a top (21) of said claw (2).

6. An apparatus according to claim 5, characterized in that from the top (21) of said claw (2) an air pipe leads to said vacuum pipe (3).

7. An apparatus according to claim 5 or 6, characterized in that a piston (7) of said pump (6) has air and milk surfaces (8, 9) which are of different areas, the difference area (10) being used to return the piston (7).

8. An apparatus according to claim 5, 6 or 7, characterized in that it is provided with a pick-up to indicate the piston travel for the purpose of measuring the milk quantity.

9. An apparatus according to claim 5, 6, 7 or 8, characterized in that it has been provided with a sampling nipple (19) for obtaining a sample.

**Patentansprüche**

1. Melkverfahren für mit einer über Kopf laufenden Milchleitung (12) und einem Milchsammelstück (2) versehene Leitungsmelkmaschinen, dadurch gekennzeichnet, daß in dem Milchsammelstück (2) während des Melkens ein ständiger Unterdruck aufrechterhalten wird, indem Luft aus dem Oberabschnitt (21) des Milchsammelstücks (2) zu einer Unterdruckleitung (3) abgeführt wird, und daß die Milch unmittelbar aus dem unteren Teil des Milchsammelstücks (2) auf einem unteren Weg durch eine Saugleitung (4) mit Hilfe einer Pumpe (6) in die Milchleitung (12) gefördert wird.

2. Verfahren nach Anspruch 1, dadurch gekennzeichnet, daß in der Milchleitung (12) atmosphärischer Druck aufrechterhalten wird, in dem die Milch über die Milchleitung (12) fließt, die in Richtung auf einen Farmtank geneigt ist, so daß ein etwa gleichmäßiger Durchfluß gewährleistet ist.

3. Verfahren nach Anspruch 1, dadurch gekennzeichnet, daß die Milch aus dem Milchsammelstück (2) mittels einer Kolbenpumpe (6) abgeführt wird, die durch einen zur Melkmaschine gehörenden Pulsator (5) gesteuert ist und die den Unterdruck in der Unterdruckleitung (3) nutzt.

4. Verfahren nach Anspruch 3, dadurch gekennzeichnet, daß ein Kolben (7) der Pumpe (6) während der ersten Phase jedes Doppelhubs des Pulsators (5) durch die Saugleitung (4) Milch in eine Milchkammer (17) der Pumpe ansaugt und während der zweiten Phase die Milch durch eine Milchzufuhrleitung (11) in die Milchleitung (12) fördert.

5. Vorrichtung zur Anwendung in einem Verfahren nach einem der Ansprüche 1, 2, 3 oder 4, dadurch gekennzeichnet, daß eine Leitungsmelkmaschine mit einer Kolbenpumpe (6) versehen ist, durch die Milch aus einem unteren Abschnitt eines Milchsammelstücks (2) über eine Saugleitung (4) in eine Milchkammer (17) der Pumpe (6) angesaugt und aus der Milchkammer (17) über eine Milchzufuhrleitung (11) in eine Milchleitung (12) gepumpt wird, in der atmosphärischer Druck herrscht, wobei eine Unterdruckleitung (3) an einen Oberabschnitt (21) des Milchsammelstücks (3) angeschlossen ist.

6. Vorrichtung nach Anspruch 5, dadurch gekennzeichnet, daß aus dem Oberabschnitt (21) des Milchsammelstücks (2) eine Luftleitung zur Unterdruckleitung (3) führt.

7. Vorrichtung nach Anspruch 5 oder 6, dadurch gekennzeichnet, daß ein Kolben (7) der Pumpe (6) eine luftbeaufschlagte und eine milchbeaufschlagte Oberfläche (8, 9) aufweist, die unterschiedliche Flächengrößen haben, wobei die Differenzoberfläche (10) für den Rückhub des Kolbens (7) benutzt wird.

8. Vorrichtung nach Anspruch 5, 6 oder 7, dadurch gekennzeichnet, daß sie mit einer Meßvorrichtung zur Anzeige des Kolbenwegs zwecks Messung der Milchmenge versehen ist.

9. Vorrichtung nach Anspruch 5, 6, 7 oder 8, dadurch gekennzeichnet, daß sie mit einem Probenippel (19) zum Aufnehmen einer Probe ausgerüstet ist.

**Revendications**

1. Procédé de traite pour machines de traite à tuyaux munies d'un tuyau de lait suspendu (12) et d'une bride de serrage (2), caractérisé en ce qu'un vide continu est maintenu dans la bride de serrage (2) pendant la traite par amenée de l'air depuis le dessus (21) de la bride de serrage (2) jusqu'à un tuyau sous vide (3) et en ce que le lait est acheminé directement depuis la partie inférieure de la bride de serrage (2) par un itinéraire inférieur à travers un tuyau d'aspiration (4) à l'aide d'une pompe (6) jusque dans le tuyau de lait (12).

2. Procédé selon la revendication 1, caractérisé en ce que la pression atmosphérique est maintenue dans le tuyau de lait (12), le lait s'écoulant via le tube de lait (12), lequel s'incline vers un réservoir de l'exploitation agricole pour fournir un débit sensiblement uniforme.

3. Procédé selon la revendication 1, caractérisé en ce que le lait est extrait de la bride de serrage (2) au moyen d'une pompe à piston (6) régulée par un générateur de pulsations (5) de l'appareil de traite et utilisant le vide dans le tuyau sous vide (3).

4. Procédé selon la revendication 3, caractérisé en ce qu'un piston (7) de la pompe (6), au cours de la première phase de chaque double battement du générateur de pulsations (5), aspire le lait à travers le tuyau d'aspiration (4) jusque dans une chambre de lait (17) de la pompe et au cours de la seconde phase refoule le lait via un tuyau de lait (11) jusque dans le tuyau de lait (12).

5. Appareil destiné à l'utilisation dans un procédé selon l'une quelconque des revendications 1, 2, 3 ou 4, caractérisé en ce qu'un appareil de traite à tuyaux est muni d'une pompe à piston (6) grâce à laquelle le lait est aspiré depuis une partie inférieure d'une bride de serrage (2) via un tuyau d'aspiration (4) jusque dans une chambre de lait (17) de la pompe (6), et qu'il est pompé à partir de la chambre de lait (17) via un tuyau de lait (11) jusque dans un tuyau de lait (12), où règne la pression atmosphérique, un tuyau sous vide (3) étant raccordé au-dessus (21) de la bride de serrage (2).

6. Dispositif selon la revendication 5, caractérisé en ce qu'à partir du dessus (21) de la bride de serrage (2) un tuyau d'air mène au tuyau sous vide (3).

7. Appareil selon la revendication 5 ou 6, caractérisé en ce qu'un piston (7) de la pompe (6) comporte des surfaces d'air et de lait (8, 9) qui sont de sections différentes, la différence de section (10) servant au retour du piston (7).

8. Appareil selon la revendication 5, 6 ou 7, caractérisé en ce qu'il est muni d'un capteur pour indiquer la course du piston permettant de mesurer la quantité de lait.

9. Appareil selon la revendication 5, 6, 7 ou 8, caractérisé en ce qu'il est muni d'un téton d'échantillonnage (19) destiné à obtenir un échantillon.